# EUROPEAN PATENT APPLICATION

(11) **EP 2 804 413 A1**
(43) Date of publication of application: **19.11.2014**
(21) Application number: 13168087.8
(22) Date of filing: 16.05.2013
(51) Int. Cl.: H04W 16/32, H04W 24/02, H04W 84/04

(54) **Method for creating a virtual user-plane cell, computer system, apparatus for a wireless communication system, control plane base station, and wireless communication system**

(71) Applicant: NTT DoCoMo, Inc., Chiyoda-ku Tokyo 100-6150 (JP)
(72) Inventor: Agyapong, Patrick, 80687 München (DE); Ternon, Emmanuel, 80687 München (DE); Hu, Liang, 80687 München (DE); Taoka, Hidekazu, 80687 München (DE)
(74) Representative: Zimmermann, Tankred Klaus

(57) **Abstract**

A method for creating in a wireless communication system a virtual user-plane cell including a user-plane base station is described. The wireless communication system comprises a control-plane base station having a coverage area including a plurality of user-plane base stations. The method comprises identifying (206) an anchor user from a user set in the coverage area of the control-plane base station, selecting (208) from the plurality of user-plane base stations in the coverage area of the control-plane base station a user-plane base station allowing to serve the anchor user, associating (214) the mobile stations from the user set that can be served with a power spectral density lower than the anchor user by the selected user-plane base station with the selected user-plane base station, and creating a virtual user-plane cell including the selected user-plane base station and the users associated with the selected user-plane base station.

## Description

The present invention relates to the field of wireless communication networks, especially to the field of wireless communication systems including control/user-plane separated networks. Embodiments of the invention relate to approaches for creating, in a wireless communication system having a control-plane base station with a coverage area including a plurality of user-plane base stations, a virtual user-plane cell including a user-plane base station.

In a wireless communication system including, e.g., an heterogeneous network as radio access network control signals and user data signals may be separated into two distinct overlaid networks, the so-called control/user-plane separated networks or C/U-plane separated networks.

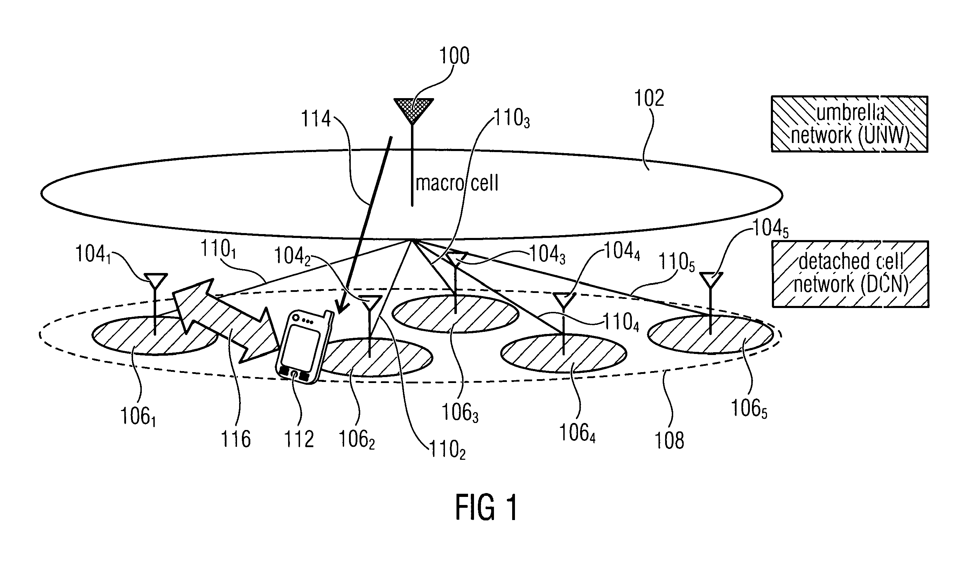

Fig. 1 shows the general structure of a C/U-plane separated network. The C/U-plane separated network comprises an umbrella network (UNW) including one or more control plane base stations (C-plane BSs). Fig. 1 schematically shows a single control plane base station or C-plane BS 100. The C-plane BS 100 may be the base station of a macro cell or of a micro cell. Fig. 1 shows a structure where the C-plane BS 100 is a base station of a macro cell. These cells operate in currently existing frequency bands, for example in the 2 Gigahertz frequency band, using currently standardized systems like LTE/LTE-A and also guarantee backwards compatibility for legacy mobile stations (MSs), i.e., such mobile stations which just support the current standards. The C-plane BS 100 has a coverage area 102 also referred to as the C-plane. The C/U-plane separated network further comprise a detached cell network (DCN) comprising a plurality of user plane base stations or U-plane BSs 104₁ to 104₅ each having associated therewith respective coverage areas 106₁ to 106₅ defining user-cells or U-cells. A cell, like a U-cell 106, formed by the U-plane BS is referred to as a small cell. The U-cells 106₁ to 106₅ form the U-plane or user plane 108 of the C/U-plane separated network. The U-cells 106₁ to 106₅ are smaller than the coverage area 102 of the macro cell. The DCN comprises several U-plane BSs 104₁ to 104₅ defining the smaller or U-cells 106₁ to 106₅ that may operate in frequency bands different from the frequency bands used in the macro cell or the umbrella network, for example in higher frequency bands, like the 3-5 Gigahertz band. The U-cells 106₁ to 106₅ are connected to the umbrella network through respective backhaul links 110₁ to 110₅. Fig. 1 further shows a mobile station 112 receiving control signals from the macro cell 100 as is schematically depicted by arrow 114 and that communicates user data signals via one of the U-cells, in the example of Fig. 1, via the U-plane BS as is depicted by arrow 116.

A mobile station (MS) may be connected to the network depicted in Fig. 1 using one of several modes, e.g. using a legacy mode or a detached cell (DC) mode. In the legacy mode the umbrella network takes care of the transmission of both control signals and user data signals (C+U transmission). This mode is used either to support legacy MSs, or to support a low number of newer MSs having very high mobility or having lower data rate requirements. In this mode, the detached cell network is not used. In the DC mode the umbrella network is responsible for the C-plane communication, i.e. the transmission of control signals (C transmission), and the detached cell network is responsible for the U-plane communication, i.e. the transmission of user data signals (U transmission). The U-plane BSs are switched on only when necessary. Legacy mobile stations do not support this mode, and therefore connect to the network only via the legacy mode.

The problem with the network depicted in Fig. 1 is that interference may severely impact the achievable system capacity without some form of interference coordination in the U-plane. Furthermore, sudden traffic variations and network dynamics may put severe strain on parts of the network leading to a poor quality of service (QoS) for users in that part of the network while resources sit idle in other parts of the network.

Conventional approaches for interference mitigation in small cell deployments may be divided into two categories. The first category focuses on enforcing orthogonality in the transmissions of the macro cells and the small cells in time or frequency. This is done by defining resource units where transmissions are allowed only for the macro base station (e.g., the C-plane BS 100 in Fig. 1), or for the small cell base stations (e.g., the U-plane BSs 104 in Fig. 1). One example is the almost blank subframe (ABS) eICIC technique as defined in the LTE-Advanced Standard with further variations being described in the art. Although this approach somehow mitigates interference between a macro cell and a small cell, it does so at the expense of network capacity since some resources are left idle. Furthermore, such a semi-static assignment of resources prevents the network from adjusting to user distribution and traffic evolution in the network. Most importantly, this strategy fails to address the interference caused between the small cells.

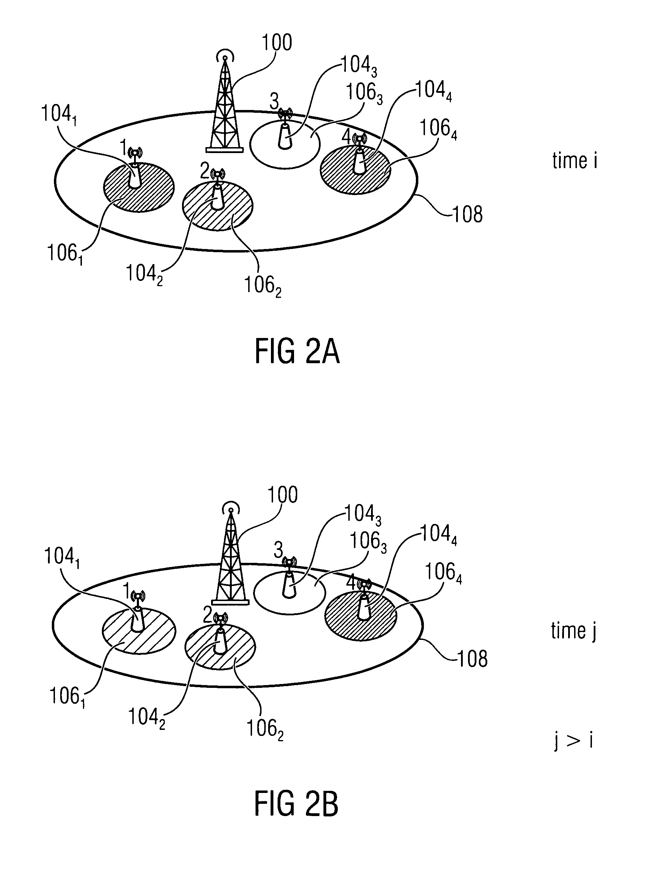

The second category for interference mitigation emphasizes autonomous and distributed operation of the small cells in a manner which allows the small cells to dynamically adjust to their environment. In accordance with this approach, small cell base stations sense their environment and adjust their usage of resources such as frequency or power in order to mitigate interference and improve capacity. This approach is schematically depicted in Fig. 2 on the basis of a plurality of small cell base stations adjusting the usage of their frequency at different instances of time. Fig. 2(a) shows a U-plane 108 including four U-cells 106₁ to 106₄ defined by the respective U-plane BSs 104₁ to 104₄. Also, the C-plane BS 100 is shown. At a first time *i* the U-plane BSs adjusts their used frequencies such that adjacent U-cells operate at different frequencies. In Fig. 2(a) U-cells 106₁ and 106₄ may operate at the same frequency as these two cells have a sufficiently large distance from each other so that no interference when using the same frequency is expected. At a second instance in time, see Fig. 2(b) showing the U-plane 108 at a time *j* that is later than time *i* the interference conditions somehow change with regard to the U-cells 106₁ and 106₂ so that these two U-cells now make use of frequencies different from frequencies used at time *i.* The drawback with this approach is that it tends to optimize only the local performance of the small cell and does not necessarily optimize the performance of the macro cell coverage area 108 as a whole due to the lack of global information at the small cell. Moreover, autonomous and dynamic adjustments limit the networks ability to quickly react to sudden traffic variations and/or user mobility within the network.

Several approaches dealing with small cell deployment are known, as well as several approaches teaching the transmission power control for communication between a base station and a user terminal. Other approaches enable a cell to dynamically change its size by changing the transmit power level of its control signals based on measurements received from user terminals. However, these approaches are focused on autonomously allowing a base station to vary the transmit power used for control signals based on measurement reports from users.

US 8,295,874 B2 describes an approach for a user equipment to send a message to a small cell base station to reduce its control signal transmission power level when the received power at the most distant user equipment falls outside a predefined operating band. This approach is focused on optimizing the control channel transmission power in order to dynamically adjust cell footprint and minimize interference caused to other small cells.

EP 2 071 738 A1 describes a method for a small cell to adjust its pilot transmission power based on measurement reports from user equipment in order to mitigate control signal interference.

EP 2 416 610 A2 describes a method for a small cell base station to autonomously vary its control signal transmission power based on a received signal strength of control signals from a macro base station and other small cell base stations. The small cell base station determines path loss and transmit power of other base stations based on the received signal. The type of base station that transmits the signal is classified, and the received power information from the macro base station is used to independently adjust the transmission power of the small cell base station.

EP 2 068 577 A1 describes a method for forming several fixed cells around the same base station by means of directional antennas and power control to fully cover a target area without blind spots.

EP 2 506 639 A1 describes a method to adapt a pilot signal transmission power of a plurality of base stations in order to adapt coverage to serve user needs within the network.

Ye et al., "Capacity and Coverage Enhancement in Heterogeneous Networks," IEEE Wireless Communications, 18(3), June 2011, and Andrews et al., "Femtocells: Past, Present and Future," IEEE JSAC, 30(3), April 2012, describe cell association concepts to be explored in small cell networks for interference mitigation and capacity enhancement.

It is an object of the present invention to provide an approach allowing for an improved interference coordination and resource allocation in a centralized small cell deployment allowing response to a dynamic evolution of user distribution and traffic requirement in the network.

This object is achieved by a method of claim 1, a computer system of claim 12, an apparatus of claim 13, a control-plane base station of claim 14 and a wireless communication system of claim 15.

The present invention provides a method for creating in a wireless communication system a virtual user-plane cell including a user-plane base station, the wireless communication system comprising a control-plane base station having a coverage area including a plurality of user-plane base stations, the method comprising:
identifying an anchor user from a user set in the coverage area of the control-plane base station;
selecting from the plurality of user-plane base stations in the coverage area of the control-plane base station a user-plane base station allowing to serve the anchor user;
associating the mobile stations from the user set that can be served by the selected user-plane base with the selected user-plane base station; and
creating a virtual user-plane cell including the selected user-plane base station and the users associated with the selected user-plane base station.

In accordance with embodiments, identifying the anchor user comprises selecting from the user set the user fulfilling one or more predefined requirements.

In accordance with embodiments, selecting the user-plane base station is based on a network situation around the respective user-plane base stations in the coverage area of the control-plane base station.

In accordance with embodiments, the large scale propagation conditions are obtained using measurement reports from users or from a database mapping the large scale propagation conditions around the respective user-plane base stations in the coverage area of the control-plane base station.

In accordance with embodiments, the method comprises determining the user set by selecting from the plurality of users in the coverage area of the control-plane base station a set of users that can be potentially served by the user-plane base stations in the coverage area of the control-plane base station.

In accordance with embodiments, a user in the mobile user set is selected in accordance with one or more of the following criteria: user capability, user mobility, user rate requirement, user subscription class, and user transmission history, wherein the user capability comprises one or more of the operating frequency range, the maximum transmit power, and the transmission capability.

In accordance with embodiments, creating the virtual user-plane cell comprises assigning a virtual cell identification to the virtual user-plane cell.

In accordance with embodiments, the virtual user-plane cell creation is performed by the control-plane base station; the control-plane base station sends information through backhaul links to the user-plane base stations and over the air to the users, wherein the information sent to the user comprises information about the virtual cell with which the user is associated and the user-plane base station serving that virtual cell, and wherein the information sent to the user-plane base stations comprises information about the users associated with each virtual cell controlled by the user-plane base station; and the user-plane base stations exchange data for exiting users directly with the new serving user-plane base station or through the control-plane base station.

In accordance with embodiments, the steps of identifying, selecting, associating and creating are run periodically.

In accordance with embodiments, a time to the next run is decreased when conditions in the network necessitate reallocation of resources, the conditions comprising one or more of the mobility of users, changing traffic requirements, macro cell load, an entry condition regarding a user, and an exit condition regarding a user.

In accordance with embodiments, the method comprises generating a table that lists for each created virtual small cell the selected user-plane base station, the associated users, the required capacity and the maximum transmit power spectral density.

The present invention provides a computer system for performing, when running on a computer, a method in accordance with embodiments of the invention.

The present invention provides an apparatus for a wireless communication system comprising a control-plane base station having a coverage area including a plurality of user-plane base stations, the apparatus comprising a controller for creating a virtual user-plane cell including a user-plane base station in accordance with a method in accordance with embodiments of the invention.

The present invention provides a control plane base station in a wireless communication system, the wireless communication system comprising the control plane base station , wherein the control plane base station comprises a coverage area including a plurality of user plane base stations; and the control plane base station comprises a controller for creating a virtual user-plane cell including a user-plane base station in accordance with a method in accordance with embodiments of the invention.

The present invention provides a wireless communication system, comprising a control plane base station having a coverage area including a plurality of user plane base stations for serving one or more users; wherein the system is configured to create a virtual user-plane cell including a user-plane base station in accordance with a method in accordance with embodiments of the invention.

Embodiments of the invention provide a novel approach for dynamically creating a virtual small cell which is flexible to respond to the dynamic evolution of user distribution and traffic requirements in the wireless communication system. An anchor user is selected for defining a footprint of the small cell, and a U-plane BS capable of serving the anchor user is selected together with additional users that may be served by the selected U-plane BS. The selected U-plane BS and the users associated therewith define the virtual small cell. , and embodiments of the invention allow for an efficient resource allocation which meets the capacity needs of the network, regardless of the evolution of user distribution or traffic requirements in the network over time. This approach is advantageous as it introduces only a small overhead and does not require stringent constraints on the kind of backhaul connections that exist between the macro cell and the small cells which in turn results in a flexible and low costs network deployment. A further advantage of embodiments of the invention is that it provides for the possibility of addressing in overlaid network architectures comprising a macro cell and several small cells the high capacity demands that are placed on the radio access networks, especially in future developments of such networks, and it allows realizing the full potential of such networks to meet the anticipated capacity needs and to provide for effective techniques for interference coordination and resource allocation.

In accordance with embodiments, an integrated procedure for interference coordination and resource allocation in centralized small cell deployments is provided which is flexible to response to the dynamic evolution of user distribution and traffic requirement in the network. The procedure employs a small-cell creation and user association concept, where specific criteria are used to select the anchor user that defines the footprint of the virtual small cell. Considerations about the transmit power and capacity requirements are used in the procedure to associate users to the dynamically created virtual small cells.

In accordance with further embodiments, a simple centralized power control procedure is provided for coordinating an interference course between the virtual small cells which allows maximizing resource reuse.

In accordance with yet further embodiments, a frequency partitioning and allocation procedure is described, which dynamically assigns enough frequency resources to meet the capacity needs of different virtual small cells.

In another embodiment, a specific signaling and specific measurements are provided to be performed by the user equipment and the small cell base station which allows the implementation of the inventive approach.

The above embodiments allow achieving efficient resource allocation for meeting the capacity needs of the network, regardless of the evolution of the user distribution or traffic requirements in the network over time. At the same time, embodiments only incur very minimal overhead and do not require stringent constraints on the kind of backhaul connection that exists between the macro cells and the small cells which in turn leads to a very flexible and low cost network deployment.

When compared to the above summarized prior art, embodiments of the invention are different from simple approaches allowing transmission power control for a communication between a base station and a user terminal in that embodiments of the invention focus on predetermining the maximum power that a small base station may use for the transmissions, i.e., embodiments are focused on the base station power control which is independent of the user equipment power control.

When compared to the above mentioned conventional approaches allowing a cell to dynamically change its size by changing the transmit power level of its control signals based on measurements received from user terminals, for example cell breathing, embodiments of the invention allow for a central entity, the macro base station or C-plane base station, to predetermine the maximum size of the virtual cell, and this size may not be independently altered by the small cell base station.

When compared to the approach described in US 8,295,874 B2, in accordance with the present invention the macro base station explicitly sends the signals to the small cell base station about the maximum transmission power that may be used for any communication. The small cell base station determines which transmission power to actually use within a range up to the maximum for data transmissions. Further, the footprint of virtual small cell is determined by the C-plane base station and not by traditional control signaling from the U-plane base station.

Other than in EP 2 071 738 A1, embodiments of the invention are not focused on pilot transmissions. Rather, the maximum transmission power that may be used in a virtual small cell is set by signaling from the macro base station. The small cell base station independently chooses the actual transmission power within the preset range.

When compared to EP 2 416 610 A2, in accordance with embodiments of the invention the macro base station sends signals to the small cell base station indicating only the maximum power it is allowed to use for transmissions. However, the macro base station does not indicate implicitly or explicitly which actual transmission power the small cell base station uses.

When compared to EP 2 068 577 A1, embodiments of the invention allow forming virtual small cells dynamically to meet different capacity needs and is not focused on avoiding blind spots. Further, the concept of the anchor user equipment is used to determine the footprint of the virtual small cell, which is contrary to the teachings to determine boundaries of created fixed cells.

When compared to EP 2 506 639 A1, embodiments of the invention do not focus on adapting pilot signal transmission power, rather the macro base station determines the footprint of a virtual small cell, but not the pilot signal transmission from the small cell base station.

When compared to the publications of Ye et al. and Andrews et al., embodiments of the invention teach to introduce the concept of using an anchor user equipment or user to determine the service area of the virtual small cell.

Thus, other than the above summarized conventional approaches, embodiments of the invention provide for the possibility of implementing a centralized interference coordination and resource allocation for small cells on the basis of information exchanged between the small cells and the macro cell using a backhaul link. Embodiments of the invention are advantageous as the centralized interference coordination allows for an efficient management of the interference between the small cells and for an associated improvement of the system capacity.

In the following, embodiments of the invention will be described in further detail with reference to the accompanying drawings, in which:
- Fig. 1: shows the general structure of a C/U-plane separated network;
- Fig. 2: illustrates a conventional approach allowing small cell base stations to adjust their frequency to mitigate interference and improve capacity, wherein Fig. 2(a) shows a U-plane a first time *i,* and Fig. 2(b) shows the U-plane at a time *j* that is later than time *i*;
- Fig. 3: illustrates the adjustment of the power spectral density of a small cell base station and the dynamic partitioning of frequency resources in accordance with an embodiment of the invention, wherein Fig. 3(a) shows a U-plane a first time *i,* and Fig. 3(b) shows the U-plane at a time *j* that is later than time *i*;
- Fig. 4: shows a structure of a C/U-plane separated network similar to Fig. 1;
- Fig. 5: shows a flow diagram of a virtual small cell-UE association and power allocation method in accordance with an embodiment;
- Fig. 6: illustrates the required inputs for the virtual cell creation and association method of Fig. 5 and how they are provided;
- Fig. 7: illustrates an example for the virtual small cell creation and UE-virtual small cell association using the method of Fig. 5, wherein Figs. 6(a) to (k) show how virtual small cells are generated and how respective users or UEs are associated with the respective small cells;
- Fig. 8: schematically depicts the virtual small cell interference coordination and resource allocation approach in accordance with embodiments of the present invention;
- Fig. 9: illustrates the differences between a fixed power assignment (Fig. 9(a)) and a dynamic power assignment (Fig. 9(b));
- Fig. 10: illustrates a dynamic frequency allocation approach;
- Fig. 11: describes an embodiment to deal with the entry of a UE;
- Fig. 12: describes a method to deal with a UE exit situation;
- Fig. 13: shows a wireless communication system including a plurality of macro cells;
- Fig. 14: shows a detached cell system as in Fig. 3, wherein the C-plane BS 100 includes a controller and a database; and
- Fig. 15: shows an apparatus in a detached cell system of Fig. 3 including the a database and a controller coupled via an interface with a C-plane BS.

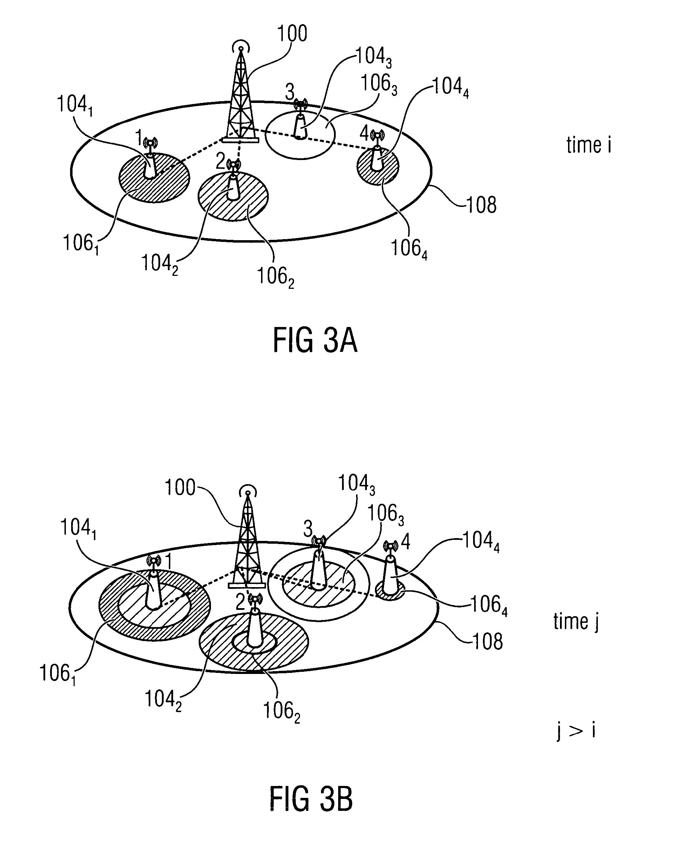

In accordance with embodiments of the invention, a virtual user-plane cell is created. More specifically, in a wireless communication system comprising a control-plane base station having a coverage area including a plurality of user-plane base stations, similar to the one described with regard to Fig. 1, on or more virtual user-plane cells, each including a user-plane base station, are created. In accordance with embodiments, an integrated resource allocation procedure is provided where a macro base station, for example the C-plane BS in Fig. 1, uses relevant information to dynamically create and associate user equipment (UEs) to virtual small cells, to adjust the power spectral density of a small cell base station and to dynamically partition frequency resources to meet the network capacity needs. Fig. 3 shows a similar representation as Fig. 2, namely a user-plane 108 including the respective U-cells 106₁ to 106₄ each including a U-plane BS 104₁ to 104₄. Also, the C-plane BS 100 is shown. Like in Fig. 2, also Fig. 3 shows the user-plane 108 at a first instance of time *i* in Fig. 3(a), and at a second, later instance of time *j* in Fig. 3(b). When looking at Figs. 3(a) and (b), it can be seen that in accordance with embodiments of the invention the power of the respective user-plane base stations is changed and also the resource (e.g., frequency) allocation is changed. For example, when looking at U-cell 106₁, the power has been increased at the later time *j* and the frequencies are partitioned such that at the edge of the U-cell 106₁ a different frequency is used when compared to the center area. In a similar way, the U-cells 106₂ and 106₃ are modified. Further, U-cell 106₄ operates with a reduced power as is indicated by the smaller U-cell 106₄ when compared to the same cell at time *i*.

In the following embodiments will be described how to implement the definition of virtual cells in accordance with embodiments of the invention to address the shortcomings of the prior art solutions mentioned above.

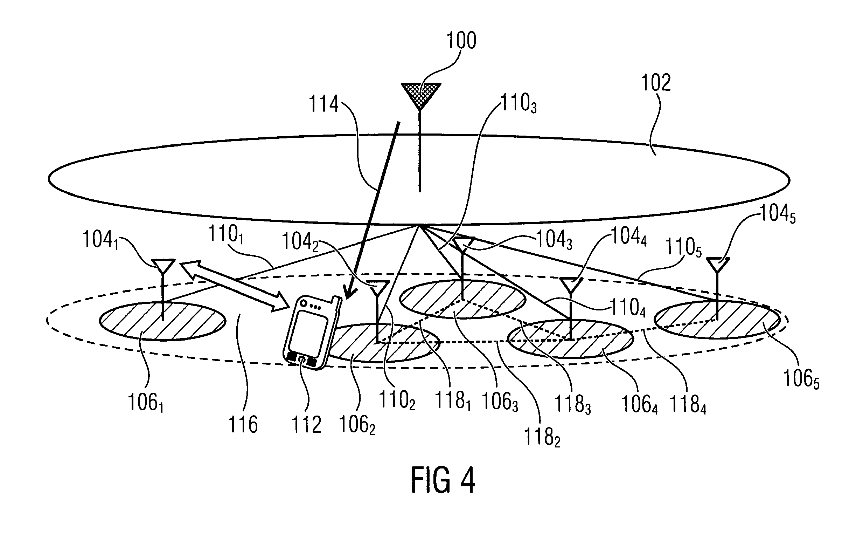

Fig. 4 shows a structure of a C/U-plane separated network similar to Fig. 1. In Fig. 4, the same reference signs are used as in Fig. 1. In Fig. 4, in addition to the backhaul connections 110₁ to 110₅, in accordance with embodiments also backhaul links may exist between one or more of the U-plane base stations. In the example depicted in Fig. 4, a first U-plane backhaul link 118₁ exists between the U-plane BS 104₂ of U-cell 106₂ and the U-plane BS 104₃ of the U-cell 106₃. Further backhaul connections 118₂ to 118₄ exist between the U-plane base stations 104₂ and 104₄, between the U-plane base stations 104₃ and 104₄, and between the U-plane base stations 104₄ and 104₅. Embodiments of the invention provide a centralized resource allocation strategy for small cells, where the C-plane BS 100 applies a novel cell association concept to dynamically create virtual small cells and employs the U-plane BS power control to mitigate potential interference between the virtual small cells in order to facilitate resource reuse and enhance the system capacity.

In accordance with further embodiments, a centralized dynamic frequency partitioning algorithm is provided which is able to provide enough resources to the U-plane BSs 104 to cope with dynamic capacity needs in different parts of the network. In accordance with embodiments of the invention, the network deployment resulting in the structure as shown in Fig. 4 comprises a macro base station or C-plane BS 100 that controls a set of small cell base stations, the U-plane BSs 104₁ to 104₅. As described above the control-plane and the user-plane are separated from each other, and the macro base station is responsible for both C-plane and U-plane communications, whereas the small cell BS is responsible only for U-plane communications. The necessary communication among the U-plane base stations and the C-plane base station is done via the backhaul link 110 between the U-plane 108 and the C-plane 102 and also using, when being provided, the backhaul links 118 provided in the U-plane.

In the following embodiments regarding the virtual small cell creation, the UE-virtual small cell association and the virtual small cell power allocation will be described. In accordance with these embodiments, a virtual small cell is dynamically created on the basis of a UE (user equipment) anchor and a macro cell assisted UE-virtual cell association that may be based on information about the UE location, the UE mobility, the UE QoS requirements, UE measurement reports, UE capabilities and U-plane BS capabilities. Further, a centralized interference coordination approach will be described, in accordance with which the C-plane BS dynamically adjusts the maximum power spectral density that each U-plane BS is allowed to use on each allocated frequency resource.

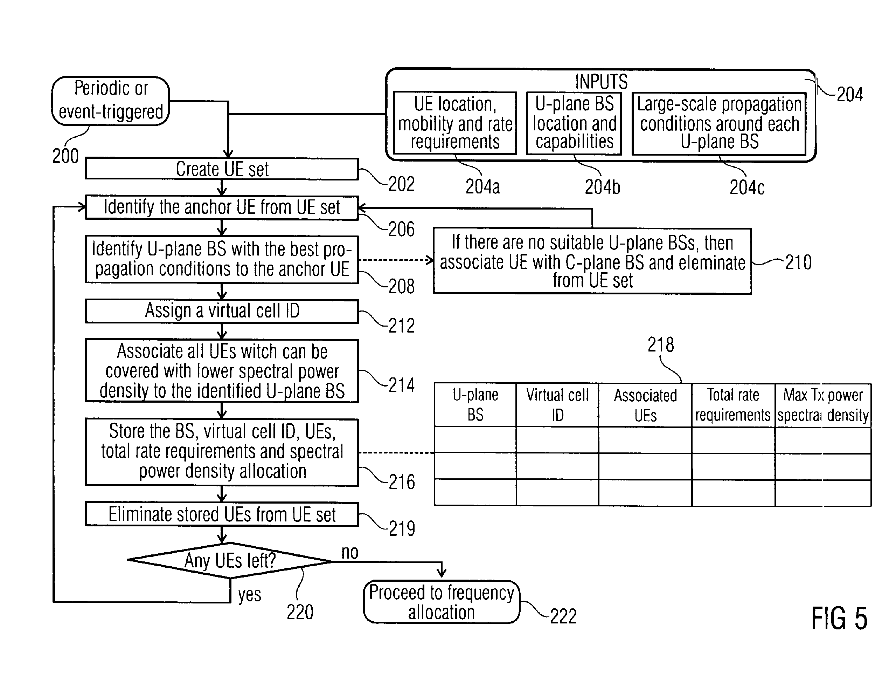

Fig. 5 shows a flow diagram of a virtual small cell-UE association and power allocation method in accordance with an embodiment. The method depicted with regard to Fig. 5 performs the joint tasks of virtual small cell creation, UE-virtual small cell association and virtual small cell power allocation.

The method depicted in Fig. 5 is triggered periodically or in response to a predefined event, as is indicated at 200. In a first step 202 a UE (user equipment, user or mobile user) set is created. As is indicated at 204, the method in accordance with embodiments of the invention receives various inputs, for example a first input 204a including information about the UE location, its mobility and its rate requirements. Further, information 204b comprising information about the U-plane base station location and its capabilities as well as information 204c describing large-scale propagation conditions around each U-plane base station are provided as an input to the method. The UE set creation procedure 202 determines a subset of UEs within the macro coverage or the coverage area 102 of the C-plane base station 100 (see Fig. 4) that will be served by U-plane base stations 104 in the coverage area 102. The C-plane base stations 100 uses criteria such as UE capabilities, for example operating frequency ranges, maximum transmit power, transmission capabilities, etc., UE mobility, for example fast UEs will cause too many handovers if served by U-plane base stations, UE rate requirements, UE subscription class, UE transmission history and further input parameters 204 to determine the subset of UEs that may be potentially served by U-plane base stations 104 in the coverage area 102 of the network. The UE set is dynamically updated before each run of the method and it is dynamically updated during the runtime to remove UEs that have been associated with a virtual small cell. Once the UE set has been created at 202, the method proceeds to step 206 at which an anchor UE is identified from the UE set created in step 202. The anchor UE determines the footprint of a virtual small cell. Several criteria may be used to select the anchor UE from the UE set. For example, the anchor UE may be chosen as the UE with the lowest rate requirements from the UE set. In this way, the virtual small cell boundary will contain the UE with low rate requirements, which makes it easy to meet QoS requirements at the edge of the virtual small cell. Alternatively, the anchor UE may be chosen as the UE with the highest rate requirements in order to ensure that high rate UEs are offloaded as much as possible to the U-plane base stations. In accordance with another embodiment, the anchor UE may be chosen as the most stable UE in terms of mobility, rate requirements or previous history which ensures that the virtual small cell boundaries remain stable over long periods of time. It is noted that also other criteria and weighted combinations of different criteria may be explored to select an anchor UE at step 206.

After the anchor UE has been determined from the UE set, the method proceeds to step 208 at which a U-plane base station is identified having the best propagation conditions to the anchor UE. The C-plane base station 100 may use previously acquired information about large scale propagation conditions around each U-plane base station 104 to select the U-plane base station that provides the best SNR to the anchor UE. Other criteria may be used to refine this choice, for example the U-plane base station that uses the least power to meet the requirements of the anchor UE may be selected among all U-plane BS 104 that meet the requirements of the anchor UE. The large scale propagation environment may be obtained using measurement reports from UEs (based on pilot measurements of neighboring U-plane base stations) or from a database mapping the large scale propagation conditions around each U-plane base station within the C-plane BSs' footprint.

If there is no U-plane base station available to serve the anchor UE, the method will proceed to step 210 where it is determined that there is no suitable U-plane base station. In this case, the anchor UE selected in step 206 is associated with the C-plane base station 100 and eliminated from the UE set. The method then returns to step 206 where from the remaining UEs in the reduced UE set a new anchor UE is identified and also a U-plane base station is identified for the new anchor UE.

If a U-plane base station is identified in step 208, the method will proceed to step 212 where, after identifying the best U-plane base station for the anchor UE, a virtual cell that is centered on the U-plane base station and that extends to the anchor UE is created by the C-plane base station and a specific ID, the virtual cell ID, is assigned. The method then proceeds to step 214 where all UEs in the UE set that may be served reliably within the coverage area are associated with the virtual small cell created in step 212.

The method then proceeds to step 216 where the identified user-plane base station, the virtual cell ID, the UEs, the total rate requirements and the spectral power density allocation is stored, for example in a UE virtual small cell association table as depicted at 218. In the table, the anchor UE in the cell may be stored first in the list of associated UEs. Further details for generating the table in accordance with embodiments will be described later. The maximum power spectral density for each virtual cell may be determined as the minimum power spectral density required by the responsible U-plane BS (the identified U-plane BS) to reliably serve the anchor UE of the virtual small cell. Several procedures may be used to determine the minimum power spectral density required to reliably serve the anchor UE, some of which will be described in further detail below. In step 216, the table 218 is created that lists the virtual small cells created, the associated UEs, the responsible U-plane BS for each virtual small cell, the required capacity for each virtual small cell and the maximum transmit power spectral density for each virtual cell.

Following this, the method moves to step 219, where all stored UEs are eliminated from the UE set, and in step 220 it is determined whether any UEs are left. If this is true, the method will go back to step 206 where a new anchor UE for a new small cell is identified from the remaining UEs in the reduced UE set. Otherwise, if no UEs are left, the method will proceed to a frequency allocation process 222 that will be described in further detail later.

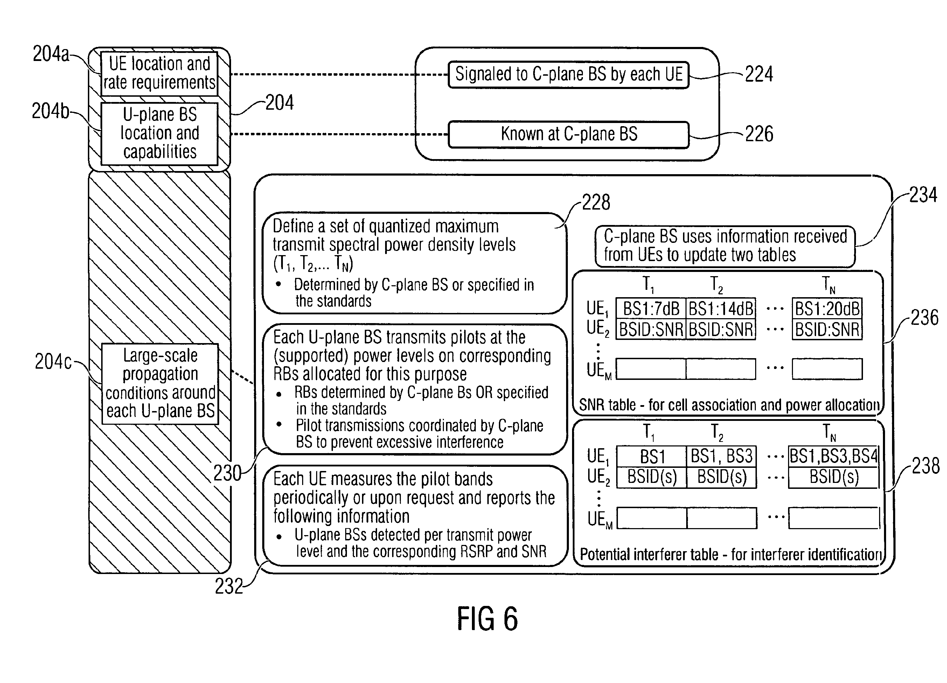

The method described with regard to Fig. 5 receives several inputs 204, and an approach to obtain these inputs in accordance with embodiments of the invention will be illustrated in further detail in Fig. 6, which illustrates the required inputs for the virtual cell creation and association method of Fig. 5 and how they are provided. More specifically, Fig. 6 illustrates how the inputs are processed at the C-plane base station 100 to obtain both an SNR table and a potential interferer table which may be used during the virtual small cell creation, the UE-virtual small cell association, the virtual small cell power assignment and the interferer identification, as shall be described in further detail below. In Fig. 6, on the left hand side the inputs 204 also indicated in Fig. 5 are shown. The inputs 204a regarding the UE location and the rate requirement are obtained from each UE. More specifically, as is indicated at 224 the UE location and the rate requirements are signaled to the C-plane base station 100 by each UE. The input 204b, namely the U-plane base station location and capabilities are known at the C-plane base station 100, as is indicated at 226.

The input 204c, namely the large-scale propagation conditions around each U-plane base station may be obtained in various ways, for example by applying the channel sounding approach. Fig. 6 shows a further embodiment for obtaining the large-scale propagation conditions around each U-plane base station. In a first step 228 a set of quantized maximum transmit spectral power density levels T₁, T₂, ... T_{N} are defined. These levels may be defined by the C-plane base station or may be specified in the communication standard used.

In a next step 230 each U-plane base station 204 transmits pilots at the supported power levels on corresponding resources blocks (for example frequencies) allocated for this purpose. The resource blocks may be determined by the C-plane base station 100 or may be specified by the standard. The pilot transmissions are coordinated by the C-plane base station 100 for avoiding excessive interference. In the next step 232 each user equipment UE measures the pilot bands periodically or upon request and reports the following information:
- the U-plane base stations detected by transmit power level, and
- the corresponding RSRP (reference signal received power) and the SNR (signal to noise ratio).

This information is forwarded from the respective UEs to the C-plane base station 100 which, at step 234, uses this information to generate a SNR table 236 and a potential interferer table 238. The SNR table may be used for cell association and power allocation and indicates for each of the defined maximum transmit spectral power density levels T₁ to T_{N} and for each user equipment UE₁ to UE_{M} the respective U-plane base stations detected at the respective levels yielding the maximum SNR. For example, user equipment UE₁ detected at level T₂ user-plane base station "1" (ID = "1") with an SNR of 14 dB.

The potential interferer table 238 may be used for interferer identification and indicates for the respective maximum transmit spectral power density level T₁ to T_{N} and for each user equipment UE₁ to UE_{M} the user-plane base stations detected above a certain threshold by the respective user equipment at the respective level. For example, user equipment UE₁ detected at level T₂ the user-plane base stations "1" and "3", which are potential interferers.

It is noted that the above described approach for obtaining the large scale propagation conditions around a U-plane base station is one possibility. More specifically, the use of pilot signals at quantized levels is one way to map the large scale propagation environment. Other approaches, such as probing, may also be used. The main issue is that the SNR table and the potential interferer table are to be generated either on the basis of the approach described above with regard to Fig. 6 or on the basis of other approaches, as these tables, in turn, serve as a basis to choose the base stations in the user-plane for the user equipments and to determine the frequency resources to be allocated to virtual cells based on potential interferers.

In other words, the C-plane base station 100 uses the measurement reports from the UEs to construct the above described SNR table 236 and the potential interferer table 238. In the embodiment described with regard to Fig. 6, the maximum transmit power density for a virtual cell is chosen as the minimum power density that the controlling U-plane base station is able to use to realize the rate requirements of an anchor UE in the virtual cell. Based on maximum power assignments for each virtual small cell, the C-plane base station uses the potential interferer table to construct an interference graph.

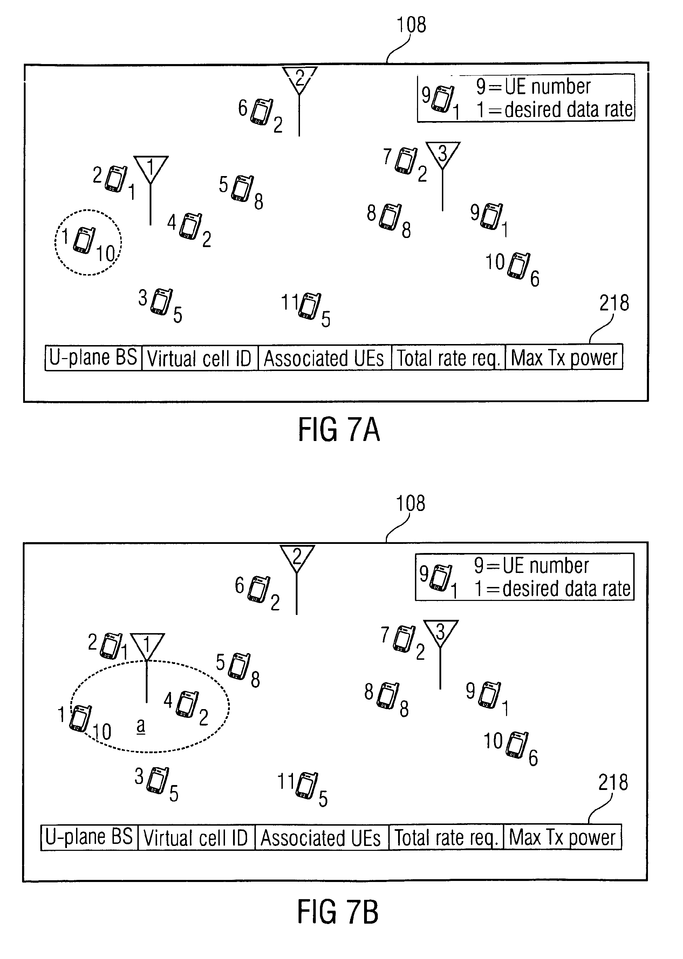

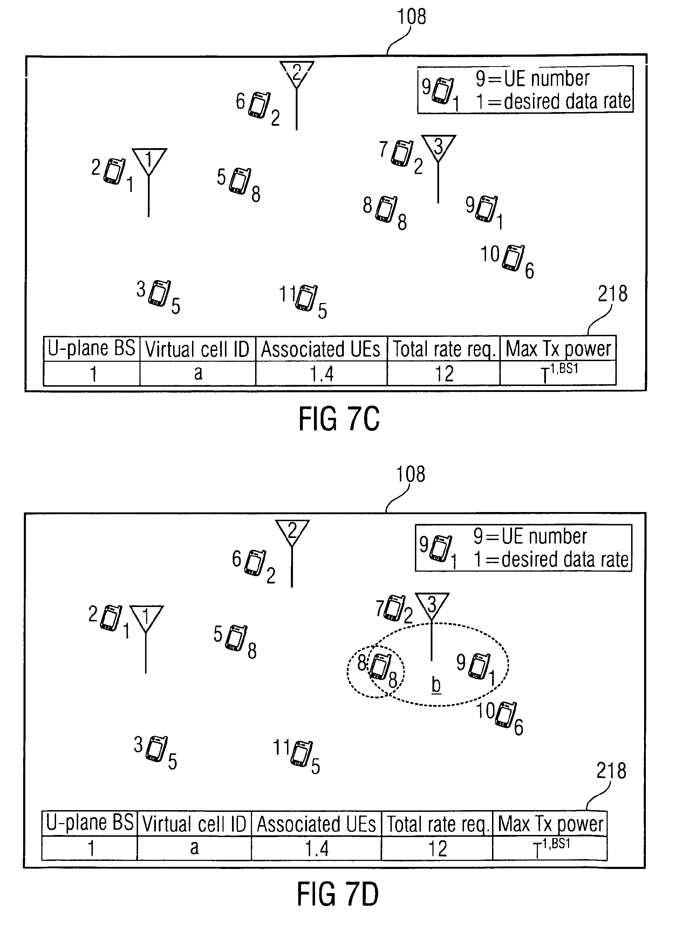

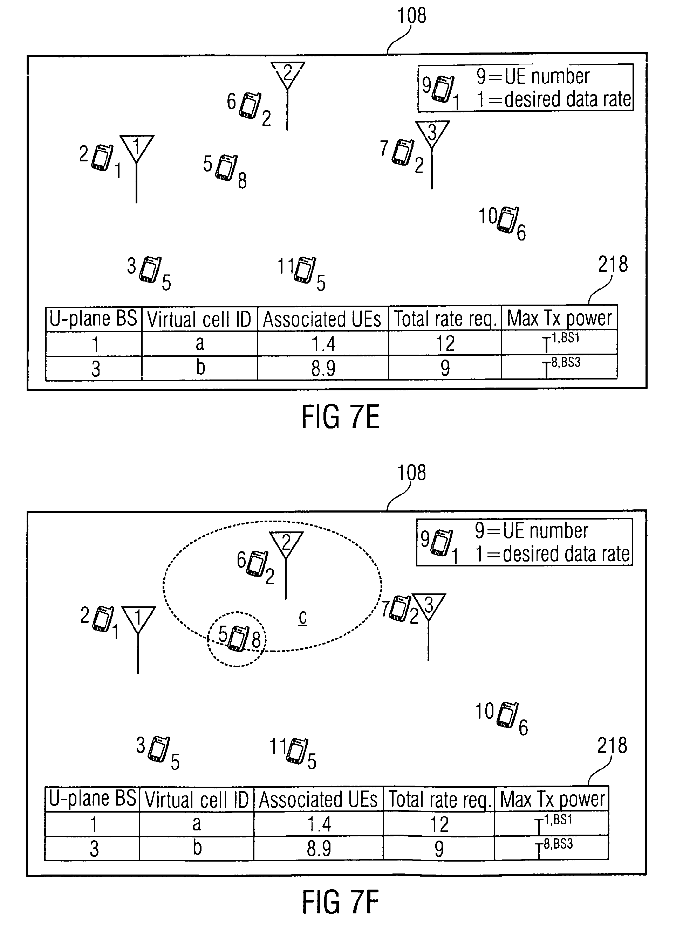

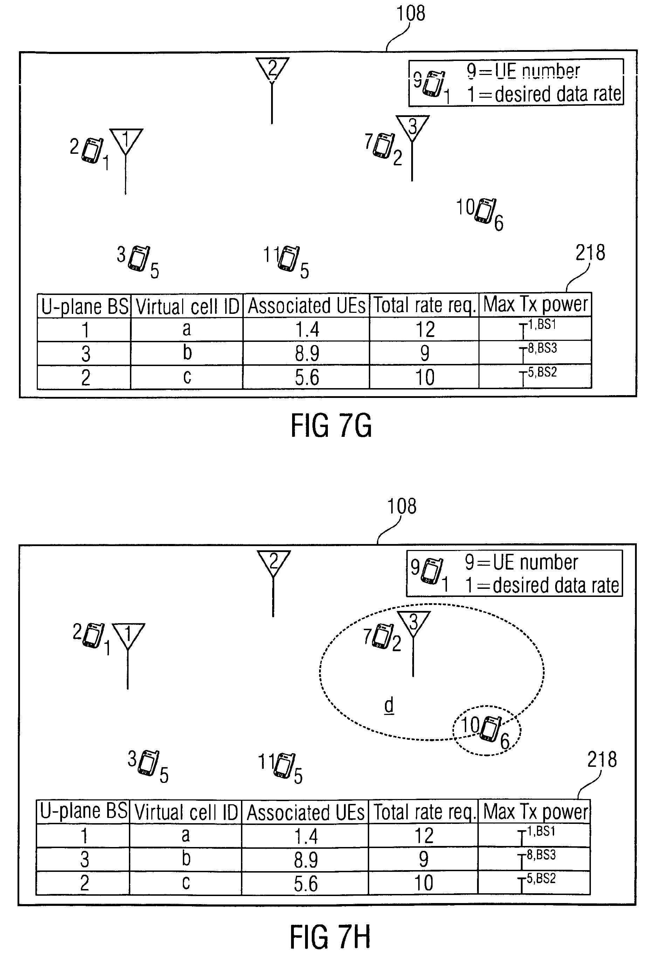

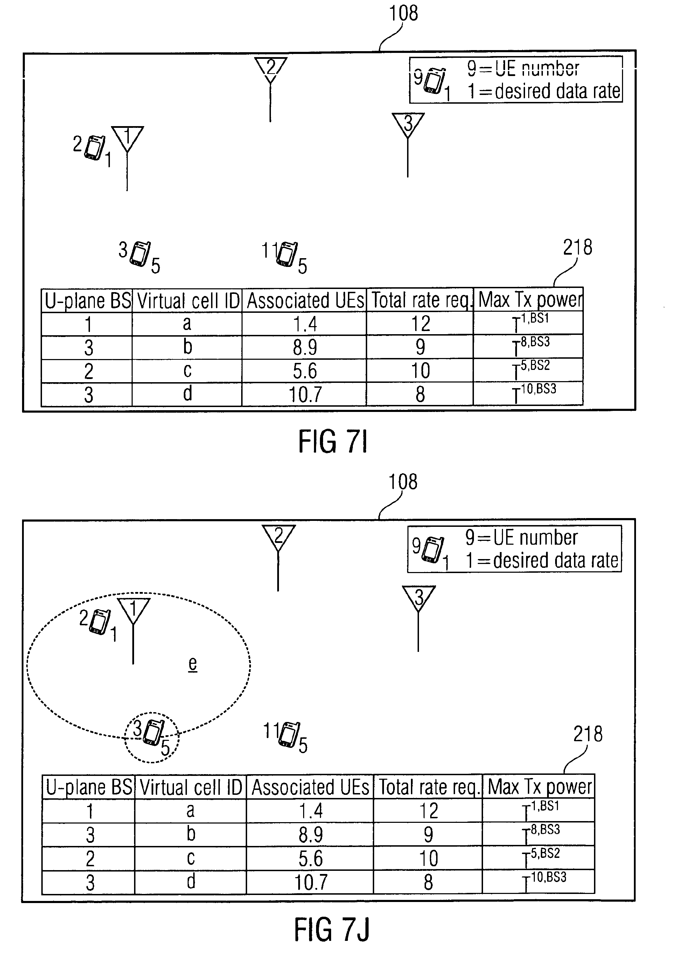

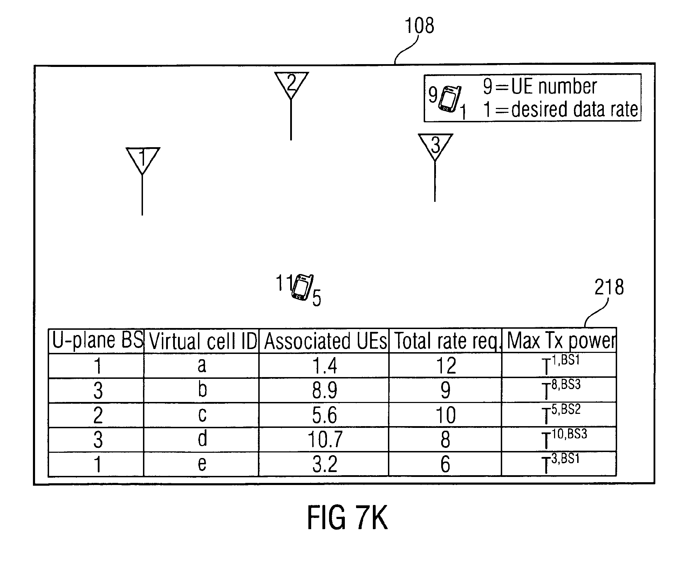

In the following, with regard to Fig. 7, an example for the virtual small cell creation and UE-virtual small cell association using the method of Fig. 5 will be given. Figs. 7(a) to (k) show how virtual small cells are generated and how respective users or UEs are associated with the respective virtual small cells. In Fig. 7(a) a starting situation is shown. The user-plane 108 includes the user-plane base stations BS1, BS2 and BS3. It is assumed that in the U-plane 108 eleven UEs are provided. In Fig. 7(a) the number on the upper left hand side of a user equipment indicates the UE number, and the number on the lower right hand side indicates the desired data rate for the respective user equipment. In the lower part of the figure, the table 218 described with regard to Fig. 5 is indicated which will be populated as the algorithm of Fig. 5 is applied. Fig. 7(a) shows the algorithm that has been started at step 200 (see Fig. 5) and for which already a UE set has been created as described with regard to Fig. 5 in step 202. In the example of Fig. 7 the UE set includes eleven UEs having respective desired data rates associated therewith. In the next step, an anchor UE is identified from the UE set (see step 206 in Fig. 5). In the example of Fig. 7, the anchor UE is chosen as the UE having the highest rate requirements. As outlined above with regard to Fig. 5, also other requirements may be considered, however, in the example described with regard to Fig. 7 the highest rate requirements are assumed. In the UE set indicated in Fig. 7(a) user equipment UE1 indicated by the dashed circle has the highest rate requirement, i.e. the highest desired data rate. Therefore, in accordance with step 206 of Fig. 5, UE1 is selected as an anchor UE. For the anchor UE1, the U-plane base station BS1 is identified as the one having the best propagation conditions to the anchor UE (see step 208 in Fig. 5). Thus, by means of the user-plane base station 1 and the user equipment UE1, the anchor user, a virtual small cell is defined and this cell is assigned a virtual cell ID, for example the ID "a" (see step 212). Then, all UEs which may be covered with lower spectral power density are associated with the U-plane BS1 (see step 214). In the example of Fig. 7, of all the UEs UE2, UE3, and UE4 around U-plane base station BS1, only UE4 is identified as a UE that may be covered with lower spectral power density and is therefore associated with U-plane base station BS1, as is shown in Fig. 7(b), in which also the virtual small cell "a" is indicated. In the table 218 the selected U-plane base station BS1, the ID "a" and the associated UEs , namely UE1 and UE4, are stored (see step 216), as may be seen from Fig. 7(c). In the table, the anchor UE is stored first so that the first entry in the column associated UEs indicates the anchor UE which in this case is UE1. Further, the total rate requirements for the associated UEs is indicated which, in the example described in Fig. 7, is 12 as the rate requirement of UE1 is 10 and the rate requirement of UE4 is 2. Also, the maximum transmit power T^{1,BS1} is stored. After storing the above mentioned information in accordance with step 216, the method described with regard to Fig. 5, in step 219, eliminates the stored UEs from the UE set so that, as is shown in Fig. 7(c), only UE2, UE3 and UE5 to UE11 remain. Since the UE set still includes UEs, the method now returns to step 206. From the remaining UEs in the UE set, the UE having the highest rate requirement is selected as an anchor UE.

In the situation depicted in Fig. 7(d), two UE candidates having the same highest rate requirement are shown, namely UE5 and UE8. UE8 is selected as the anchor UE and the U-plane BS3 is identified as the U-plane BS having the best propagation conditions to the anchor UE. The virtual small cell defined by the anchor UE8 and the U-plane BS3 has associated therewith the virtual cell ID "b". Of the remaining UEs, it is determined that only UE 9 may be covered with a lower spectral power density and is therefore associated with the U-plane BS3. As is depicted in Fig. 7(e), this information is stored in the table 218 indicating for the U-plane BS3 the virtual cell ID "b" and the associated UEs 8, 9 with a total rate requirement of 9. Also the maximum transmit power T^{8,BS3} is indicated. As may be further seen from Fig. 7(e), the UEs associated with U-plane BS3 are eliminated from the UE set so that UE2, UE3, UE5 to UE7, UE10 and UE11 remain.

The method enters the next iteration, in which, as is shown in Fig. 7(f), UE5 having the highest rate requirement is selected as the next anchor UE and U-plane BS2 is identified as the one which has the best propagation conditions to the UE5. The virtual cell defined by U-plane BS2 and the UE5 has the ID "c". Of the remaining UEs, only UE6 is determined as the one that may be covered with lower spectral power density and is therefore also associated to the U-plane BS2. As is shown in Fig. 7(g), this information is stored in the table 218, i.e. it is indicated that U-plane base station BS2 is associated with virtual cell ID "c" including UEs 5, 6 with a total rate requirement 10. Also the maximum transmit power T^{5,BS2} is indicated. Further, the stored UEs are removed from the UE set so that only UE2, UE3, UE7, UE10 and UE11 remain.

The method then enters the next iteration step as is indicated in Fig. 7(h), in which, as the next anchor, UE10 having the highest rate requirement of the remaining UEs is selected. For this anchor UE U-plane base station BS3 is determined as the one with the best propagation conditions. This virtual small cell defined by U-plane BS3 and UE10 has a cell ID "d". It is further determined that of the remaining UEs only UE7 may be covered with lower spectral power density so that UE7 is also associated with U-plane BS3. The table 218 is updated accordingly, as is indicated in Fig. 7(i), and the stored UEs are removed from the UE set so that now, in the UE set, only UE2, UE3 and UE 11 remain.

As is indicated in Fig. 7(j), of these remaining UEs, UE3 is selected as the next anchor UE, and it is determined that U-plane BS1 has the best propagation conditions to the anchor UE3. The virtual cell defined by U-plane BS1 and the anchor UE3 has the ID "e", and of the remaining UEs, only UE2 is determined as a UE that may covered with lower power spectral density by U-plane BS1. As is shown in Fig. 7(k), the table 218 is updated accordingly and the stored UEs are removed from the UE set so that, in the UE set, only UE11 remains. The system then goes back to step 206 where UE11 is identified as the next anchor UE, however it is determined that there is no suitable U-plane BS available for UE11 so that, as is described with regard to Fig. 5 (see step 210), UE11 is associated with the C-plane base station 100 (see Fig. 3).

After this, it is determined that no UEs are left in the UE set, so that the method in Fig. 5 terminates. In accordance with embodiments, the method may now proceed to a frequency allocation approach as indicated at step 222 in Fig. 5 in case such frequency allocation is desired.

In the following, embodiments of the invention allowing for a virtual small cell frequency allocation will be described in further detail. In accordance with this embodiment, a two step method for virtual cell frequency assignment is provided. A first method identifies interferers in the dynamic interference environment introduced by dynamic power control, and a further method dynamically partitions the frequency resources to assign enough resource to meet the capacity needs of different virtual small cells without causing unnecessary interference or a waste of frequency resources.

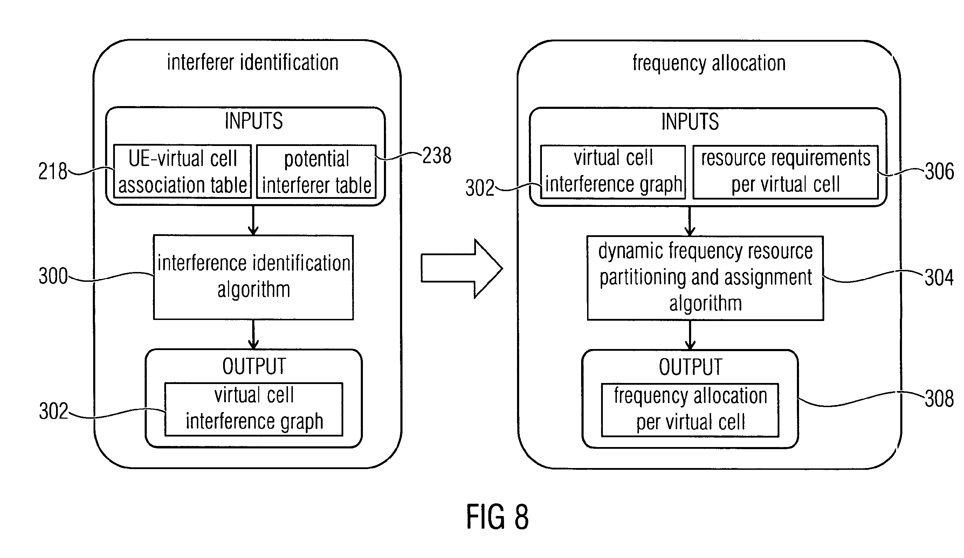

Fig. 8 schematically depicts the virtual small cell interference coordination and resource allocation approach in accordance with embodiments of the present invention. For the interferer identification step, an interference identification algorithm 300 is carried out which receives as inputs the information from the UE-virtual cell association table 218 generated by the method of Fig. 5 and the potential interferer table 238 described above with regard to Fig. 6. On the basis of the inputs from these tables, the interference identification algorithm 300 outputs a virtual cell interference graph 302. The interference identification algorithm may be performed centrally by the C-plane BS 100 or in a distributed manner by the U-plane BSs 104 and may be aggregated periodically or on demand at the C-plane base station 100. In the next step, following the interferer identification, a dynamic frequency resource partitioning and assignment algorithm 304, that may be performed centrally by the C-plane BS100, is carried out. This algorithm 304 receives for the frequency allocation as an input the virtual cell interference graph 302 generated by the interference identification algorithm 300 and the resource requirements 306 per virtual cell that are derived from the total rate requirements indicated in table 218. The algorithm 308 then outputs a frequency allocation 308 per virtual cell.

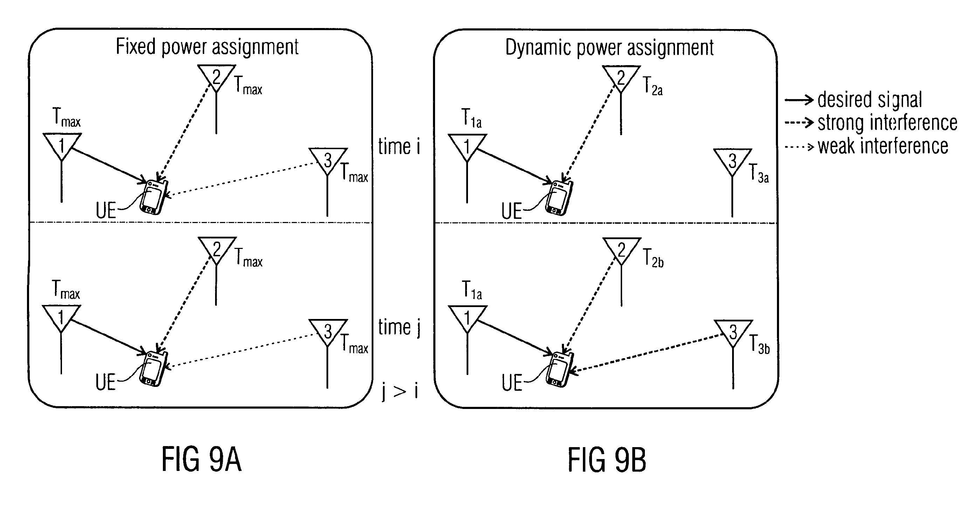

The dynamic power assignment introduces a new challenge in the interference identification since the interference environment changes constantly as the transmit powers of the U-plane BSs vary. This will be explained with regard to Fig. 9 describing the differences of a fixed power assignment (Fig. 9(a)) and a dynamic power assignment (Fig. 9(b)). Fig. 9 shows how dynamic power assignment introduces a dynamic interference environment which makes it difficult to identify potential interferers. In Fig. 9, in the upper part, the situation at a first instance of time *i* is indicated, and in the lower part a situation in a second, later instance of time *j* is indicated. A situation is assumed where a user equipment UE and three U-plane BSs 1 to 3 are provided. In the fixed power assignment situation depicted in Fig. 9(a), it is assumed that all U-plane BSs transmit at their maximum power Tₘₐₓ. Further, it is assumed that UE is to be served by BS1 so that BS1 transmits the desired signal, as shown by the solid arrow to the UE. Due to the presence of BSs 2 and 3 interference signals are also received at the UE. Since the UE is closer to BS2 than to BS3, a strong interference signal (indicated by the dotted arrow) is received from BS2 and a weak interference signal, as indicated by the dashed arrow, is received from BS3. Since a fixed power assignment is used in Fig. 9(a), the situation is the same at time *i* and at time *j*. The situation changes when a dynamic power assignment is used as is indicated in Fig. 9(b). At the time *i* it is assumed that each of the base stations 1, 2 and 3 transmit at respective different power levels T₁ₐ, T₂ₐ and T₃ₐ. In the example described with regard to Fig. 9(b), the UE is to be served by base station 1 to receive the desired signal as indicated by the solid arrow. The respective transmit power levels of base stations 2 and 3 are assumed to be such that the transmit power of base station 2 only generates a weak interference signal as is indicated by the dashed arrow and that the transmit power T₃ₐ of the base station 3 is such that no interference is observed at the user equipment. However, when changing the transmit power levels at a time *j*, the interference situation may change in a way as depicted in the lower part of Fig. 9(b). It is assumed that the transmit power of T₁ₐ of the base station 1 remains the same, however, the transmit powers T_{2b} and T_{3b} of base stations 2 and 3 are increased so that the UE, other than at the time *i,* now receives a strong interference signal as is indicated by the dotted arrow both from base station 2 and base station 3.

To address this change in the interferer situation, a scalable approach for coordinating frequency and power assignment is required as well as a reliable approach for identifying potential interferers. Further, this requires to facilitate small cell discovery in the presence of varying small cell transmit power. To address this issue, the C-plane base station needs to map the large scale propagation environment around each U-plane base station, and several mechanisms to obtain this information may be used. One example to do this is that the U-plane base stations transmit pilots for the purpose of channel measurement. The UEs measure the pilots and report the channel conditions to the C-plane base station. The C-plane base station may employ this information to optimally assign power to each U-plane base station to mitigate potential interference. Another approach involves storing a database at the C-plane base station that maps the large scale propagation environment around each U-plane base station and uses this as an input to construct a potential interference table for different power allocations. In accordance with embodiments of the invention, yet another approach is provided which may be implemented for this purpose. In accordance with this approach, the power levels that may be used by the U-plane base stations are limited to a fixed number. The U-plane base stations transmit pilot symbol at the supported power levels on specific resource blocks allocated for this purpose, and the C-plane base station coordinates the pilot transmissions and the specific resources used for the pilot transmissions in order to mitigate interference. The UEs measure the specific resource blocks periodically or upon request and report information such as the maximum achievable SNR at each power level and the responsible U-plane BS and the identities of the U-plane BSs which may be detected beyond a given threshold at each power level. This information is reported either directly to the C-plane BS or is collected at the U-plane BS and aggregated at the C-plane BS. The C-plane BS uses this information to construct the potential interferer table described above with regard to Fig. 6. Together with the UE-virtual small cell association table 218 described with regard to Fig. 5 the C-plane BS obtains all of the necessary information to construct an interference graph for all virtual cells for any power allocation.

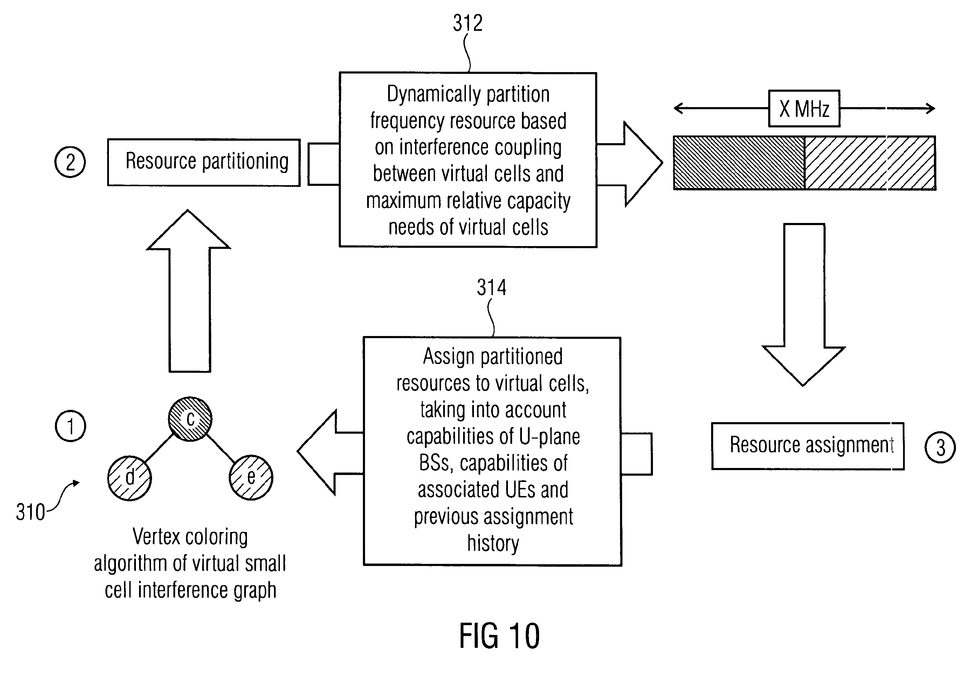

The dynamic frequency allocation approach uses the interference graph and relative capacity requirements of the virtual cells to dynamically partition the available frequency resources in a manner that fairly meets the capacity needs of all cells, without causing interference. This approach is illustrated in Fig. 10. In a first step, the capacity needs of all virtual small cells is normalized, wherein the capacity needs are determined from the table 218 indicating the total rate requirements for each virtual cell. Then, as is shown at 310, a vertex coloring algorithm of the virtual small cell interference graph is applied to determine the chromatic number. For each color, the maximum relative capacity need of all virtual cells having assigned that color is determined, as is indicated at 312 in Fig. 10, and the frequency band (X MHz) is partitioned in proportion to the maximum relative capacity requirement for each color. After the dynamic frequency partitioning, the C-plane BS assigns frequency resources to the U-plane BS serving each virtual small cell, as is indicated in Fig. 10 at 314, taking several factors into account, like the capabilities of each U-plane BS, the capabilities of the associated UEs in the virtual small cell and the previous assignment history for each U-plane BS.

In the following, embodiments of the invention will be described concerning the assisted virtual small cell discovery. As described above, the UE-virtual small cell association is performed by the C-plane BS. Hence, the UE does not know beforehand which virtual cell it needs to connect to. To facilitate virtual small cell discovery, a macro cell-assisted virtual small cell discovery method is described in accordance with which the C-plane BS sends the relevant information through the backhaul links to the U-plane BSs and over the air to the UEs. The U-plane BSs may exchange buffer data for exiting UEs directly with the new serving U-plane BS in case a direct link exists or through the C-plane BS if no such direct backhaul link between the U-plane BSs exists. In accordance with embodiments of the invention, the C-plane BS sends the following information to each U-plane BS:
- Resource allocation for each virtual small cell under the control of the U-plane BS which includes
   o frequency resources to use
   o maximum transmit power spectral density allowed on each frequency resource,
   o resource blocks in which to transmit pilot signals
- UEs that are associated with each virtual cell
- where to send buffer data for exiting UEs.

The following information is sent from the C-plane BS to each UE in the coverage area:
- the virtual small cell with which the UE is associated,
- the resource blocks on which to look for pilot signals,
- connection information for the associated virtual cell.

In the following, embodiments are described for dealing with dynamic operational challenges. To obtain maximum benefits from the above described approaches for virtual small cell creation, UE-virtual small cell association and dynamic frequency allocation several mechanisms are implemented to facilitate a real world deployment. This involves approaches to determine when to run the above described methods and to determine how to react to an entry and to an exit of UEs to the system after each run of the method. Embodiments of the invention include the method as depicted in Fig. 5 and the additional steps for dynamic frequency partitioning and allocation. In accordance with embodiments, the integrated method to perform virtual small cell creation, UE-virtual small cell association, virtual small cell power allocation and dynamic frequency partitioning allocation is run periodically. The time to the next run time of the method is monitored with a resource allocation (RA) refresh counter. For the periodic run of the method a low time granularity is set, for example 5 to 10 minutes. However, embodiments provide a mechanism for the method to be run at a higher time granularity when conditions in the network necessitate reallocation of resources. This is done using external triggers such as the mobility of the UEs, changing traffic requirements, macro cell load and the like to decrement the RA counter faster than would otherwise occur under normal circumstances. In the following, examples will be described explaining how to deal with the entry and the exit of UEs. After associating UEs to virtual small cells, the network has to deal with the movement of UEs, with requests of new UEs to enter the system, existing UEs leaving the system, existing UEs requesting new QoS, and the like. Running the above described method anytime such an event happens would be impractical. On the other hand, waiting until the next update period may lead to a degradation in service for some UEs. Therefore, in accordance with embodiments two conditions are identified that may change the nature of the network and prompt considerations for new resource allocation, and these conditions are either the entry of a UE or the exit of a UE.

An entry condition occurs when a UE first requests access to the network or when an existing UE needs to connect to a different virtual small cell because of mobility or new QoS requirements which may not be met by the serving virtual small cell. On the other hand, an exit condition occurs when an existing UE's QoS requirement may no longer be met by the serving virtual small cell, for example because it is moving outside the coverage range, or when an existing UE leaves the network, for example being switched off or entering a different macro cell.

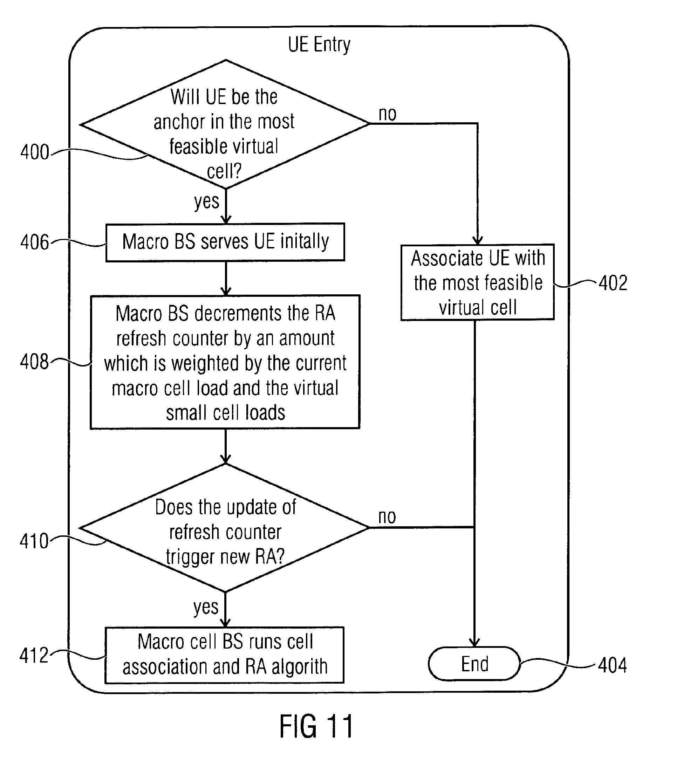

Fig. 11 describes an embodiment to deal with the entry of a UE. The entry condition occurs when a new UE enters the network or when an existing UE moves outside the coverage of its associated virtual cell and enters the coverage area of another virtual cell. In accordance with this embodiment, in a first step 400, with regard to the UE in question, it is determined whether the UE will be an anchor in the most feasible virtual cell. If this is not the case, the UE will be associated with the most feasible virtual cell in step 402 and the method ends at 404. Otherwise, i.e. if the UE in question is the anchor in the most feasible virtual cell, the method will proceed to step 406 in which the UE is initially served by the macro BS (e.g., the C-plane base station). The macro BS, at step 408, causes the RA refresh counter to decrement by an amount which may be weighted by the current macro cell load and the virtual small cell loads. In step 410 it is determined whether the update of the refresh counter triggers a new resource allocation, and, if it does, the macro cell BS will run the cell association and RA algorithm described (see step 412). Otherwise, the method ends. In accordance with embodiments, in a UE entry situation the most feasible virtual cell may be defined as the virtual small cell which uses the lowest power spectral density to meet the desired QoS requirements of the UE among all virtual cells that have enough available capacity to satisfy the desired QoS requirements of the UE. Other criteria may also be employed to define the most feasible virtual cell.

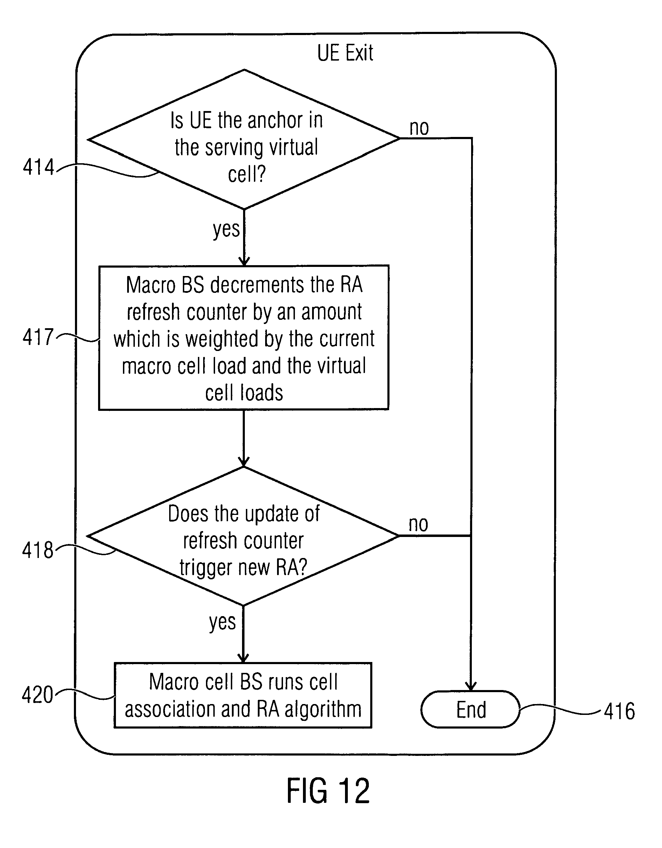

Fig. 12 describes a method to deal with a UE exit situation. An exit occurs when a UE leaves a network, leaves the coverage area of its associated virtual cell or is switched off. At step 414 it is determined whether the UE in question is an anchor in the serving virtual cell. If this is not true, the method will end at 416 as the exit of this UE will not substantially change the situation so that no resource allocation is required. However, if the exiting UE is the anchor of the serving virtual cell, in step 417 the macro base station will decrement the RA refresh counter by an amount which is weighted by the current macro cell load and the virtual small cell loads. In step 418 it is determined whether the update of the refresh counter triggers a new resource allocation, and if it does, the macro cell at step 420 will run the cell association and RA algorithm. Otherwise, the method ends.

To facilitate the method described with regard to Figs. 11 and 12, each U-plane BS may periodically or upon request send information to the C-plane BS about the current load in each virtual cell controlled by the respective U-plane BS, including the size of buffers. This information may be used by the C-plane BS to time each run of the method to minimize the likelihood of handovers.

The above described approach, in accordance with embodiments of the invention, is advantageous as it enables an efficient load balancing, allows for a flexible small cell deployment without the need for detailed planning as frequency planning is done dynamically based on cell load and UE requirements, and also no high-end backhaul capabilities are required. Further advantages are the high resource reuse through interference coordination, the ability to react quickly to variations in the user distribution and capacity requirements, and the improvements of energy efficiency when compared to centralized small cell deployments that use fixed power assignments, in general such conventional approaches operate at the maximum transmit power. A further advantage is that the QoE (Quality of Experience) for users may be further improved.

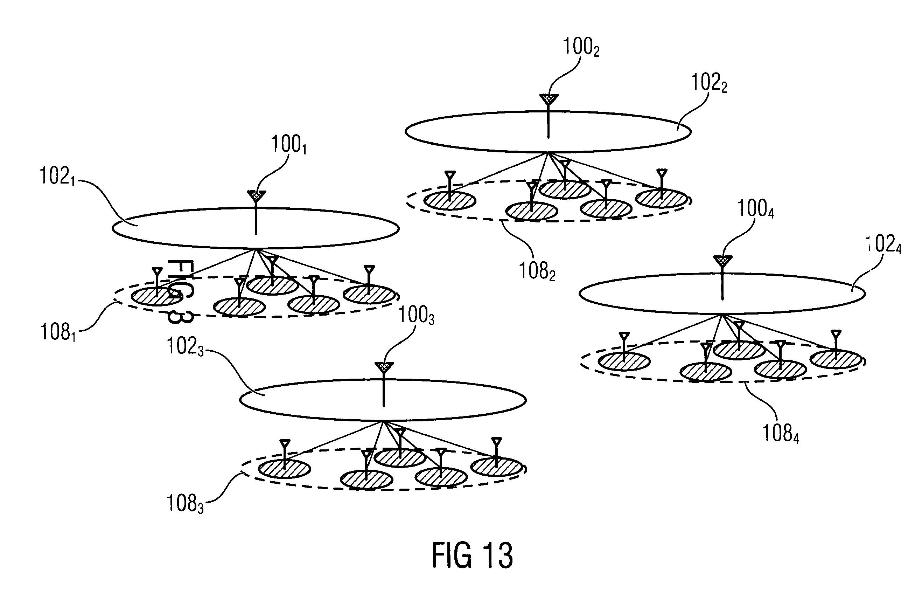

In accordance with embodiments, a wireless communication system is provided including a plurality of macro cells 100₁-100₄ each including a plurality of smaller cells, i.e. the wireless communication system includes one or more detached cell systems as depicted in Fig. 1, as is schematically represented by Fig. 13.

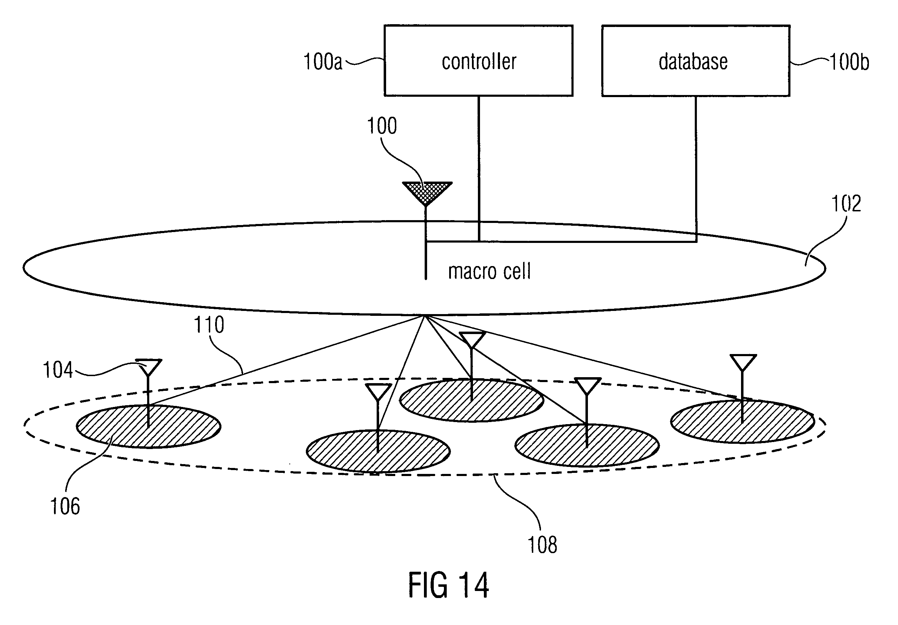

In accordance with embodiments, the inventive approach may be implemented in the C-plane BS 100 including a controller 100a controlling the operational state of one or more U-plane BSs in a way as described above. Fig. 14 shows a detached cell system as in Fig. 1 in which the C-plane BS 100 also includes the above-mentioned controller 100a. Further, in accordance with embodiments, the C-plane BS 100 also includes a database 100b as depicted in Fig. 14 for storing the respective traffic values and number of users for each grid element of the geographical grid elements into which the coverage area 102 of the C-plane BS 100 has been divided.

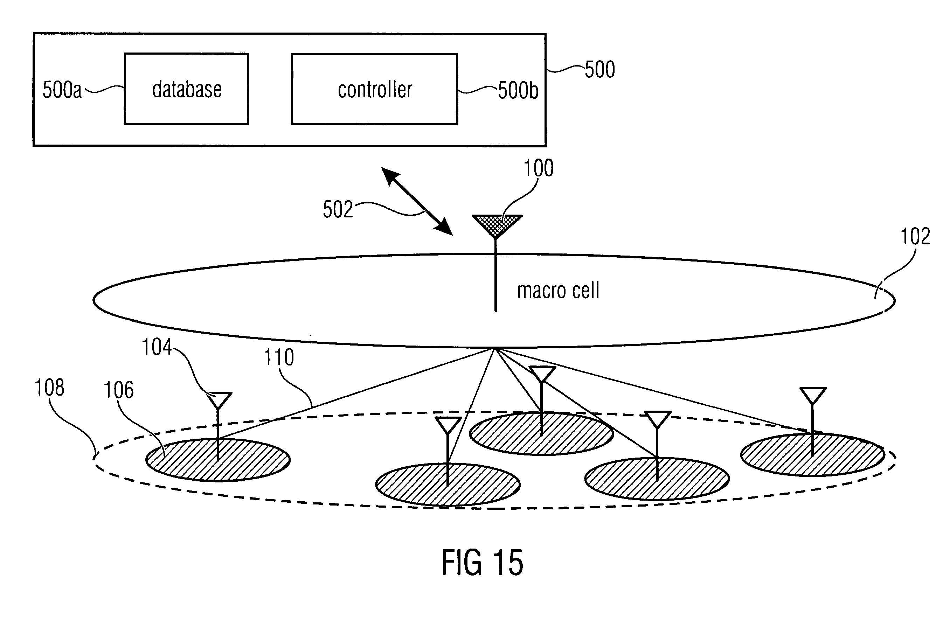

In accordance with further embodiments, an apparatus may be provided. Fig. 15 shows the detached cell system of Fig. 1 including the apparatus 500 including a database 500a and a controller 500b that is coupled via an interface schematically represented by the connection 502 with the C-plane BS 100. The apparatus 500 stores in its database 500a the respective tables described above and, by means of the controller, provides the respective signals to be communicated to the respective U-plane BSs via the interface 502.

Further, in accordance with embodiments, the U-plane BSs 104, for example by means of their backhaul connection, are provided with an interface for receiving signals controlling their operational state in a way as described above.

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A method for creating in a wireless communication system a virtual user-plane cell including a user-plane base station (104), the wireless communication system comprising a control-plane base station (100) having a coverage area (102) including a plurality of user-plane base stations (104), the method comprising:
identifying (206) an anchor user from a user set in the coverage area (102) of the control-plane base station (100);
selecting (208) from the plurality of user-plane base stations (104) in the coverage area (102) of the control-plane base station (100) a user-plane base station (104) allowing to serve the anchor user;
associating (214) the users from the user set that can be served by the selected user-plane base with the selected user-plane base station (104); and
creating a virtual user-plane cell including the selected user-plane base station (104) and the users associated with the selected user-plane base station (104).

2. The method of claim 1, wherein identifying the anchor user comprises selecting from the user set the user fulfilling one or more predefined requirements.

3. The method of claim 1 or 2, wherein selecting the user-plane base station (104) is based on a network situation around the respective user-plane base stations (104) in the coverage area (102) of the control-plane base station (100).

4. The method of claim 3, wherein large scale propagation conditions are obtained using measurement reports from users or from a database mapping large scale propagation conditions around the respective user-plane base stations (104) in the coverage area (102) of the control-plane base station (100).

5. The method of one of claims 1 to 4, comprising:
determining the user set by selecting from the plurality of users in the coverage area (102) of the control-plane base station (100) a set of users that can be potentially served by the user-plane base stations (104) in the coverage area (102) of the control-plane base station (100).

6. The method of claim 5, wherein a user in the user set is selected in accordance with one or more of the following criteria: user capability, user mobility, user rate requirement, user subscription class, and user transmission history, wherein the user capability comprises one or more of the operating frequency range, the maximum transmit power, and the transmission capability.

7. The method of one of claims 1 to 6, wherein creating the virtual user-plane cell comprises assigning (212) a virtual cell identification to the virtual user-plane cell.

8. The method of one of claims 1 to 7, wherein
the virtual user-plane cell creation is performed by the control-plane base station (100);
the control-plane base station (100) sends information through backhaul links (110) to the user-plane base stations (104) and over the air to the users (112), wherein the information sent to the user comprises information about the virtual cell with which the user is associated and the user-plane base station (104) serving that virtual cell, and wherein the information sent to the user-plane base stations (104) comprises information about the users associated with each virtual cell controlled by the user-plane base station (104); and
the user-plane base stations (104) exchange data for exiting users directly with the new serving user-plane base station (104) or through the control-plane base station (100).

9. The method of one of claims 1 to 8, wherein the steps of identifying, selecting, associating and creating are run periodically.

10. The method of claim 9, wherein a time to the next run is decreased when conditions in the network necessitate reallocation of resources, the conditions comprising one or more of the mobility of users, changing traffic requirements, macro cell load, an entry condition regarding a user, and an exit condition regarding a user.

11. The method of claim 9 or 10, comprising:
generating (216) a table (218) that lists for each created virtual small cell the selected user-plane base station (104), the associated users, the required capacity and the maximum transmit power spectral density.

12. A computer system for performing, when running on a computer, a method of one of claims 1 to 11.

13. An apparatus for a wireless communication system comprising a control-plane base station (100) having a coverage area (102) including a plurality of user-plane base stations (104), the apparatus comprising:
a controller (500b) for creating a virtual user-plane cell including a user-plane base station (104) in accordance with a method of one of claims 1 to 11.

14. A control plane base station (100) in a wireless communication system, the wireless communication system comprising the control plane base station (100), wherein
the control plane base station (100) comprises a coverage area (102) including a plurality of user plane base stations (104); and
the control plane base station (100) comprises a controller (100a) for creating a virtual user-plane cell including a user-plane base station (104) in accordance with a method of one of claims 1 to 11.

15. A wireless communication system, comprising:
a control plane base station (100) having a coverage area (102) including a plurality of user plane base stations (104) for serving one or more users;
wherein the system is configured to create a virtual user-plane cell including a user-plane base station (104) in accordance with a method of one of claims 1 to 11.

## Amended claims

### Amended claims in accordance with Rule 137(2) EPC.

**1.** A method for creating in a wireless communication system a virtual user-plane cell including a user-plane base station (104), the wireless communication system comprising a control-plane base station (100) having a coverage area (102) including a plurality of user-plane base stations (104), the method comprising:
identifying (206) an anchor user from a user set in the coverage area (102) of the control-plane base station (100), the anchor user determining a footprint of the virtual small cell to be created;
selecting (208) from the plurality of user-plane base stations (104) in the coverage area (102) of the control-plane base station (100) a user-plane base station (104) having the best propagation conditions to serve the anchor user;
associating (214) the users from the user set that can be served with a lower spectral power density than the anchor user by the selected user-plane base station (104) with the selected user-plane base station (104); and
creating the virtual user-plane cell including the selected user-plane base station (104) and the users associated with the selected user-plane base station (104), the virtual cell being centered on the selected user-plane base station (104) and extending to the anchor user.

**2.** The method of claim 1, wherein identifying the anchor user comprises selecting from the user set the user fulfilling one or more predefined requirements.

**3.** The method of claim 1 or 2, wherein selecting the user-plane base station (104) is based on a network situation around the respective user-plane base stations (104) in the coverage area (102) of the control-plane base station (100).

**4.** The method of claim 3, wherein large scale propagation conditions are obtained using measurement reports from users or from a database mapping large scale propagation conditions around the respective user-plane base stations (104) in the coverage area (102) of the control-plane base station (100).

**5.** The method of one of claims 1 to 4, comprising:
determining the user set by selecting from the plurality of users in the coverage area (102) of the control-plane base station (100) a set of users that can be potentially served by the user-plane base stations (104) in the coverage area (102) of the control-plane base station (100).

**6.** The method of claim 5, wherein a user in the user set is selected in accordance with one or more of the following criteria: user capability, user mobility, user rate requirement, user subscription class, and user transmission history, wherein the user capability comprises one or more of the operating frequency range, the maximum transmit power, and the transmission capability.

**7.** The method of one of claims 1 to 6, wherein creating the virtual user-plane cell comprises assigning (212) a virtual cell identification to the virtual user-plane cell.

**8.** The method of one of claims 1 to 7, wherein
the virtual user-plane cell creation is performed by the control-plane base station (100);
the control-plane base station (100) sends information through backhaul links (110) to the user-plane base stations (104) and over the air to the users (112), wherein the information sent to the user comprises information about the virtual cell with which the user is associated and the user-plane base station (104) serving that virtual cell, and wherein the information sent to the user-plane base stations (104) comprises information about the users associated with each virtual cell controlled by the user-plane base station (104); and
the user-plane base stations (104) exchange data for exiting users directly with the new serving user-plane base station (104) or through the control-plane base station (100).

**9.** The method of one of claims 1 to 8, wherein the steps of identifying, selecting, associating and creating are run periodically.

**10.** The method of claim 9, wherein a time to the next run is decreased when conditions in the network necessitate reallocation of resources, the conditions comprising one or more of the mobility of users, changing traffic requirements, macro cell load, an entry condition regarding a user, and an exit condition regarding a user.

**11.** The method of claim 9 or 10, comprising:
generating (216) a table (218) that lists for each created virtual small cell the selected user-plane base station (104), the associated users, the required capacity and the maximum transmit power spectral density.

**12.** A computer program product having a computer-readable medium which comprises computer-readable instructions to perform the steps of a method of one of claims 1 to 11, when executed on a computer.

**13.** An apparatus for a wireless communication system comprising a control-plane base station (100) having a coverage area (102) including a plurality of user-plane base stations (104), the apparatus comprising:
a controller (500b) for creating a virtual user-plane cell including a user-plane base station (104) in accordance with a method of one of claims 1 to 11.

**14.** A control plane base station (100) in a wireless communication system, the wireless communication system comprising the control plane base station (100), wherein the control plane base station (100) comprises a coverage area (102) including a plurality of user plane base stations (104); and
the control plane base station (100) comprises a controller (100a) for creating a virtual user-plane cell including a user-plane base station (104) in accordance with a method of one of claims 1 to 11.

**15.** A wireless communication system, comprising:
a control plane base station (100) having a coverage area (102) including a plurality of user plane base stations (104) for serving one or more users;
wherein the system is configured to create a virtual user-plane cell including a user-plane base station (104) in accordance with a method of one of claims 1 to 11.
